# EUROPÄISCHE PATENTSCHRIFT

(11) **EP 1 666 135 B1**
(45) Veröffentlichungstag und Bekanntmachung des Hinweises auf die Patenterteilung: **23.10.2013**
(21) Anmeldenummer: 04028838.3
(22) Anmeldetag: 06.12.2004
(51) Int. Cl.: B01J 2/06

(54) **Tauchbehälter zum Pelletieren von pharmazeutischen Lösungen**
Dip tank for pelletizing of pharmaceutical solutions
Réservoir plongeur pour la granulation de solutions pharmaceutiques

(43) Veröffentlichungstag der Anmeldung: 07.06.2006
(73) Patentinhaber: Messer Group GmbH, 65812 Bad Soden (DE)
(72) Erfinder: Görlich, Uwe, 47441 Moers (DE); Moser, Friedrich, 47167 Duisburg (DE); Zerwas, Stefan, 47443 Moers (DE)

(56) Entgegenhaltungen:
- EP-A- 0 919 279
- DE-A1- 10 157 413
- FR-A- 2 836 398
- US-A- 3 228 838

## Beschreibung

Die Erfindung betrifft ein Verfahren zum Pelletieren einer flüssigen oder pastösen Masse.

In der US-A-3228838 wird ein Verfahren beschrieben, in dem flüssige biologische Proben wie Blut oder Plasma in Tropfenform in einem Kühlflüssigkeitsstrom ausgefroren und in einem Sieb gesammelt werden.

In der DE-A-2550117 werden tiefgefrorene Kügelchen durch Einspritzen in ein Kühlflüssigkeitsbad erhalten. Eine weitere Einrichtung zur Pelletierung von flüssigen oder pastösen Stoffen ist aus der EP-A1-0919279 bekannt. Bei solchen kontinuierlichen Prozessen werden die Kügelchen oder Pellets mittels eines Förderbandes aus dem Kühlflüssigkeitsbad transportiert.

Die Abtrennung der gebildeten Pellets mittels einer solchen mechanischen Fördereinrichtung entspricht nicht den Hygiene-Richtlinien (GMP-Richtlinien) bei einem pharmazeutischen Prozeß, da eine validierbare Reinigung nicht sichergestellt werden kann. (GMP: Good Manufacturing Practice).

Der Erfindung liegt die Aufgabe zugrunde, ein alternatives Verfahren für die Herstellung von Pellets, insbesondere für den Pharmabereich, bereitzustellen.

Gelöst wird die Aufgabe durch ein Verfahren mit den in Anspruch 1 beschriebenen Merkmalen.

Bei dem Verfahren zum Pelletieren einer flüssigen oder pastösen Masse wird ein Kühlmittelbad mit einem flüssigen Kühlmittel verwendet, in das die Masse eingebracht wird, wobei durch Einleiten eines Gases in dem Kühlmittelbad eine Bewegung des Kühlmittels, eine Strömung des Kühlmittels oder Turbulenzen in dem Kühlmittel erzeugt werden.

Beispielsweise fallen in einem isolierten GMP-gerechten Pharma-Behälter die über eine Tropfvorrichtung gebildeten Tröpfchen (aus z.B. pharmazeutischen Lösungen) in ein bewegtes, zu Turbulenzen angeregtes Kühlmittel ( z.B. flüssiger Stickstoff in einem Tauchbecken oder Tauchbad) und werden zu Pellets fixiert und gefroren.

Bei der Pelletiereinrichtung wird bewusst auf mechanische Rühreinrichtungen in dem Kühlmittelbad verzichtet. Ein Rühr- oder Mischeffekt wird durch Einleiten eines Gases, insbesondere durch Einblasen oder Eindüsen, erzeugt. Zum Einleiten des Gases, z.B. kalter gasförmiger Stickstoff, wird vorteilhaft eine Einrichtung mit mindestens einer Düse, ein Düsen-System (Gasdüsen-System), verwendet. Das Kühlmittelbad umfasst vorzugsweise einen Behälter mit rundem Querschnitt (z.B. ein zylindrischer oder trichterförmiger Behälter). Der Behälter ist im unteren Bereich vorzugsweise konisch ausgebildet. Das untere Ende weist vorteilhaft eine schließbare Öffnung (z.B. steuerbare Bodenöffnung) auf, durch die gebildetes Produkt (Pellets) abgeführt werden kann.

Die Düsen des Düsensystems (Gasdüsen-System) sind in dem runden Behälter vorzugsweise so in dem Kühlmittelbadbehälter angeordnet, dass ein tangentialer Gasstrom erzeugt wird oder erzeugt werden kann. Die Düsen des Düsensystems zur Gaseinleitung sind vorteilhaft tangential ausgerichtet. Das Düsensystem kann mehrere Gaseinleitungen mit jeweils mindestens einer Düse umfassen.

Als Kühlmittel wird vorzugsweise ein kälteverflüssigtes Gas, insbesondere kälteverflüssigter Stickstoff (LIN oder LN₂) verwendet.

Der Behälter für das Kühlmittelbad ist in der Regel isoliert.

In dem Verfahren wird die zu pelletierende flüssige oder pastöse Masse (flüssige Probe) in die Kühlflüssigkeit des Kühlmittelbades eingetropft und die gebildeten Pellets am Boden des Kühlmittelbades oder Kühlmittelbehälters gesammelt. Zur Entnahme der gebildeten Pellets wird in der Regel das Kühlmittel aus dem Behälter abgelassen oder abgedampft. Im Falle des Ablassens des Kühlmittels werden nach Ablassen des Kühlmittels aus dem Behälter Kühlmittelsreste an den gebildeten Pellets durch Behandlung mit einem Gasstrom entfernt. Im Falle des Abdampfens des Kühlmittels erfolgt die Entfernung des Kühlmittels vorteilhaft ebenfalls durch Behandlung mit einem Gasstrom. Der Gasstrom wird beispielsweise durch das Düsensystem zugeführt. Es wird vorteilhaft ein erwärmter oder erhitzter Gasstrom für die Kühlmittelentfernung eingesetzt. Zur Erwärmung oder Erhitzung des Gasstromes dient im allgemeinen eine Heizeinrichtung, z.B. ein Heißluftgebläse.

In dem Verfahren wird die Pelletierung der flüssigen Probe vorzugsweise bei einem minimalen Kühlmittelniveau (Level) begonnen. Durch den Eintrag der Probe in das Kühlmittelbad steigt das Kühlmittelniveau an. In der Regel wird der Eintrag der Probe bei Erreichen eines vorbestimmten Kühlmittelstandes (Sollwert des Kühlmittelniveaus) beendet. Die Pelletierungs-Vorrichtung weist daher vorzugsweise eine Kühlmittelniveau-Kontrolleinrichtung, besonders bevorzugt eine Steuer-und/oder Regeleinrichtung für das Kühlmittelniveau, auf. Die Pelletierungs-Vorrichtung weist z.B. im Kühlmittelbehälter einen oder mehrere Sensoren für den Kühlmittel-Stand (Flüssigkeitsspiegel oder Füllstand) auf. Wird beispielsweise ein bestimmter Füllstandssollwert erreicht, wird das Eintropfen der flüssigen Probe beendet oder unterbrochen und das Kühlmittel aus dem Behälter abgelassen. Die im Bodenbereich des Behälters angesammelten Pellets werden vorteilhaft von anhaftenden Kühlmittelresten befreit, vorzugsweise mit Hilfe eines Gasstromes. Der Gasstrom ist besonders bevorzugt ein erwärmter oder erhitzter Gasstrom. Zur Erzeugung eines erwärmten oder erhitzten Gasstromes weist die Pelletier-Vorrichtung eine Einrichtung (Einrichtung zur Erwärmung oder Erhitzung eines Gases) auf, z.B. ein Heißgasgebläse oder eine Heizeinrichtung (z.B. Rohrabschnitt mit Widerstandsheizung). Die Wärm- oder Heizeinrichtung ist vorzugsweise gesteuert und/oder geregelt. Der Gasstrom zur Kühlmittelentfernung kann beispielsweise über das Düsensystem in den Behälter geleitet werden.

Für Pharma-Anwendungen ist vorteilhaft den Behälter in einem bestimmten Verfahrensschritt mit erhitztem Gas zur Sterilisation zu spülen. Das Gas zur Sterilisation hat z.B. eine Temperatur im Bereich von 140 bis 180 °C.
Die Pelletier-Vorrichtung weist daher vorteilhaft eine Sterilisiereinrichtung auf, die vorzugsweise gesteuert und/oder geregelt ist.

Die Pelletier-Vorrichtung ist ferner vorteilhaft mit einem Flüssigkeitsreinigungssystem ausgestattet. Beispielsweise wird in einem Reinigungsschritt mittels Düsen die Behälterwand mit einer Reinigungsflüssigkeit besprüht.

Die Erfindung wird anhand der Zeichnung erläutert.

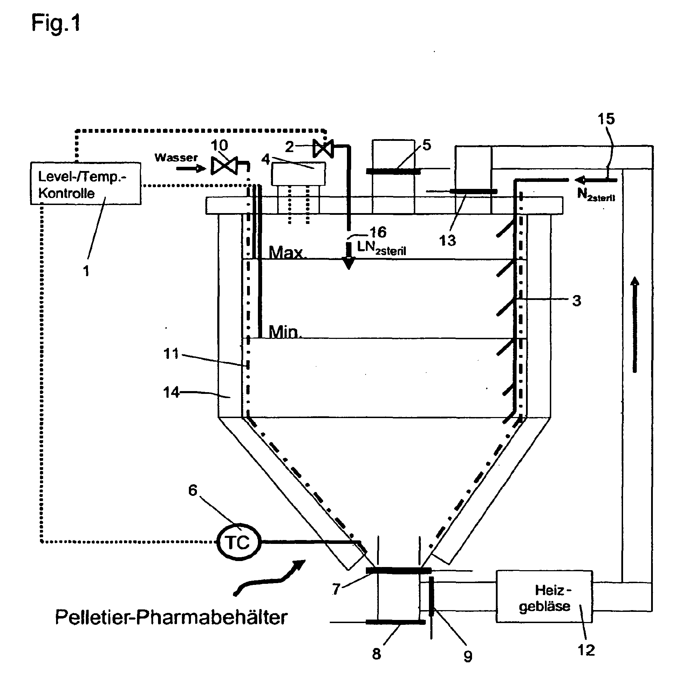

- Fig. 1: zeigt ein Schema des bevorzugten Verfahrens und der Pelletier-Einrichtung.

Im folgenden wird das Verfahren anhand eines Beispieles in Fig. **1** erläutert. Als ersten Schritt wird ein isolierter Pharmabehälter mit einem flüsigen Kältemittel z.B. flüssiger steriler Stickstoff **16** bis Niveau MIN. gefüllt. Das Kältemittel-Niveau wird über eine Level/Temp.-Kontrollvorrichtung B geregelt, über der das Stickstoff-Ventil **2** angesteuert wird. Nach Erreichen des Niveau MIN. wird über ein Düsensystem 3 ein wasserfreies Gas z.B. steriler Stickstoff **15** bei einem Druck von 1 bis 6 bar in das Stickstoff-flüssig-Bad tangential hineingeblasen, damit das Stickstoff-flüssig-Bad in kreisförmigen Bewegungen bzw. zu Turbulenzen angeregt wird. In diesem bewegten Stickstoff-Bad werden die über die Tropfvorrichtung **4** gebildeten Tröpfchen, z.B. eine Suspension mit einem pharmazeutischen Wirkstoff, zu Pellets fixiert und vereinzelt eingefroren. Bei einem stationären Stickstoff-Bad würden die Tropfen aufeinander fallen und zu großvolumige Stücke verklumpen. Das durch die Verdampfung entstehende Stickstoff-Abgas wird über den geöffneten Abgas-Schieber 5 abgesaugt, damit in dem Behälter kein unzulässiger Betriebsüberdruck entsteht. Nach dem Einfrieren fallen die vereinzelten Pellets zum Boden des Behälters. Durch die Ansammlung der durchgefrorenen Pellets steigt das Stickstoff-Niveau. Bis zum geregelten Niveau Max. kann das Pelletieren durchgeführt werden, danach wird die Vertropfung, die gasförmige und flüssige Stickstoff-Zufuhr gestoppt bzw. abgesperrt.

Bei dem zweiten Schritt muß vor Entleerung des Behälters der restliche flüssige Stickstoff verdampft werden. Hierbei wird das gleiche Düsensystem 3 zum Einblasen vom warmen Stickstoff-Gas bei einer Temperatur bis 180°C und einem Druck bis 5 bar genutzt, dabei wird über den Abgas-Schieber 5 die große noch zu verdampfende Stickstoffmenge schnellstmöglich abgeführt. Wenn über die Level/Temp.-Kontrollvorrichtung **1** eine Behältertemperatur von z.B. - 130°C angezeigt wird, dann wird das Abblasen mit Stickstoff-Gas beendet und der Verdampfungsprozeß ist abgeschlossen.

Wenn die Temperaturmessung am Boden des Behälters 6 eine Temperatur z.B. von -100°C anzeigt, dann beginnt die Entleerung des Behälters. Der Stickstoff-Schieber 7 und der Behälter-Schieber 8 werden geöffnet, der Zuluftschieber bleibt geschlossen und die noch unterkühlten Pellets werden z.B. in einem isolierten GMP-gerechten Roll-Container abgefüllt und zwischengelagert. Der Stickstoff- und Behälter-Schieber wird wieder geschlossen.

Im nächsten Schritt findet bei einer Behältertemperatur 6 z.B. von 15°C die CIP-Reinigung (Clean in Place) des Pharma-Behälters statt. Über das Öffnen des Ventils 10 wird das Reinigungsmittel z.B. Wasser über ein Düsen-System 11 in den Pharma-Behälter hineingesprüht, dabei werden bewegliche Sprühkegeldüsen eingesetzt, um die gesamte Innenfläche des Behälters zu befeuchten und zu reinigen. Nach dem Ablassen des Reinigungsmittel durch Öffnen der Schieber 7 und 8 kann mit der Sterilisation mit heißer Luft begonnen werden.

Vor dem Einschalten des Heizungsgebläses 12 werden die Schieber 8 und 5 und der Ausschnitt für die Tropfvorrichtung 4 mit einem isolierten Deckel geschlossen und der Zuluft-Schieber 9 und der Rückluft-Schieber 13 werden geöffnet. Während der Sterilisation wird der Pharma-Behälter über die Level/Temp.-Kontrolle 1 im Kreisgasprozeß bis auf z.B. 180°C aufgeheizt und sterilisiert. Über die Temperaturmessung 6 am Boden des Behälters wird die eingestellte Sterilisationstemperatur aufgenommen. Nach der Sterilisation wird der Zuluft- und Rückluft-Schieber 9 und 13 wieder geschlossen und über das Düsensystem 3 wird kalter steriler Stickstoff eingeblasen, um den Pharma-Behälter schnellstmöglich abzukühlen und damit nicht durch einen unzulässsigen Unterdruck Fremdkeime aus der Umgebung den Behälter kontaminiert. Wenn durch die Abkühlung eine Temperatur im Behälter von z.B. 60°C erreicht wird, kann mit dem Pelletieren begonnen werden.

Der Kühlmittelbehälter ist mit einer Isolierung 14 ausgestattet.

### Die Pelletier-Vorrichtung weist folgende Vorteile auf:

Bei dem Pelletieren in einem isolierten Pharmabehälter werden keine bewegliche Teile wie z.B. Rührerwellen oder das schwer zu reinigende Edelstahlgurtband eingesetzt, sondern durch das tangentialle Einblasen eines z.B. Stickstoff-Gases in das Kühlmittelbad (z.B. Stickstoff-flüssig-Bad) kann durch die angeregten Turbulenzen ein Vereinzeln der Pellets gewährleistet werden. Desweiteren kann im Bezug der geforderten Hygiene-Richtlinien (GMP-Richtlinien) eine validierbare Reinigung und Sterilisation des Pharmabehälters sichergestellt werden.

## Patentansprüche

1. Verfahren zum Pelletieren einer flüssigen oder pastösen Masse, in dem die Masse in ein flüssiges Kühlmittel eines Kühlmittelbades in einem Behälter eingebracht wird, wobei durch Einleiten eines Gases in dem Kühlmittelbad eine Bewegung des Kühlmittels oder Turbulenzen erzeugt werden.

2. Verfahren nach Anspruch 1, **dadurch gekennzeichnet, daß** das Gas tangential eingeblasen wird.

3. Verfahren nach Anspruch 1 oder 2, **dadurch gekennzeichnet, dass** als Kühlmittel ein kälteverflüssigtes Gas verwendet wird.

4. Verfahren nach einem der Ansprüche 1 bis 3, **dadurch gekennzeichnet, daß** die in dem Kühlmittelbad gebildeten Pellets am Boden des Behälters gesammelt werden.

5. Verfahren nach einem der Ansprüche 1 bis 4, **dadurch gekennzeichnet, daß** zur Entnahme der gebildeten Pellets das Kühlmittel aus dem Behälter abgelassen wird.

6. Verfahren nach einem der Ansprüche 1 bis 5, **dadurch gekennzeichnet, daß** nach Ablassen des Kühlmittels aus dem Behälter Kühlmittelsreste im Bereich der gebildeten Pellets durch Behandlung mit einem Gasstrom entfernt werden.

7. Verfahren nach einem der Ansprüche 1 bis 6, **dadurch gekennzeichnet, dass** nach Ablassen und Entfernung des Kühlmittels die gebildeten Pellets durch eine verschließbare Bodenöffnung in dem Behälter abgelassen werden.

8. Verfahren nach einem der vorhergehenden Ansprüche, **dadurch gekennzeichnet, daß** das Verfahren gesteuert und/oder geregelt abläuft.

9. Verfahren nach einem der vorhergehenden Ansprüche, **dadurch gekennzeichnet, dass** das Verfahren kontinuierlich oder diskontinuierlich durchgeführt wird.

10. Vorrichtung zum Pelletieren einer flüssigen oder pastösen Masse, mit einem Behälter zur Aufnahme eines flüssigen Kühlmittels, mit einer Eintragvorrichtung (4) zum Eintragen der Masse in das Kühlmittel, wobei der Behälter ein Kühlmittelbad enthält, in dem ein System (3) zur Einleitung eines Gases zur Erzeugung von Turbulenzen oder einer Bewegung des Kühlmittels in dem Kühlmittelbad angeordnet ist.

11. Vorrichtung nach Anspruch 10, **dadurch gekennzeichnet, daß** das System (3) mindestens eine Düse umfaßt.

12. Vorrichtung nach Anspruch 10 oder 11, **dadurch gekennzeichnet, daß** das System (3) einen tangentialen Gasstrom in dem Kühlmittelbad erzeugt.

13. Vorrichtung nach einem der Ansprüche 10 bis 12, **dadurch gekennzeichnet, daß** die Vorrichtung eine Kühlmittelniveau-Kontrolleinrichtung (1) aufweist.

14. Vorrichtung nach einem der Ansprüche 10 bis 13, **dadurch gekennzeichnet, daß** die Vorrichtung eine Einrichtung (12) zur Erwärmung oder Erhitzung eines Gases aufweist.

15. Vorrichtung nach Anspruch 14, **dadurch gekennzeichnet, daß** die Einrichtung zur Erwärmung oder Erhitzung eines Gases mit einer Steuer- und/oder Regeleinrichtung verbunden ist.

16. Vorrichtung nach einem der Ansprüche 10 bis 15, **dadurch gekennzeichnet, daß** die Vorrichtung eine Sterilisiereinrichtung aufweist.

17. Vorrichtung nach einem der Ansprüche 10 bis 16, **dadurch gekennzeichnet, daß** die Vorrichtung ein Düsensystem (11) für eine Reinigungsflüssigkeit aufweist.

## Claims

1. Method for pelletizing a liquid or pasty material, in which the material is introduced into a liquid coolant in a coolant bath in a vessel, with generation of movement of the coolant or turbulence by introduction of a gas in the coolant bath.

2. Method according to Claim 1, **characterized in that** the gas is blown in tangentially.

3. Method according to Claim 1 or 2, **characterized in that** the coolant used is a cold-liquefied gas.

4. Method according to any of Claims 1 to 3, **characterized in that** the pellets formed in the coolant bath are collected at the base of the vessel.

5. Method according to any of Claims 1 to 4, **characterized in that** the pellets formed are withdrawn by letting the coolant out of the vessel.

6. Method according to any of Claims 1 to 5, **characterized in that** the letting of the coolant out of the vessel is followed by removal of coolant residues in the region of the pellets formed by treatment with a gas stream.

7. Method according to any of Claims 1 to 6, **characterized in that** the letting-out and removal of the coolant are followed by discharge of the pellets formed through a closable base orifice in the vessel.

8. Method according to any of the preceding claims, **characterized in that** the method proceeds under open-loop and/or closed-loop control.

9. Method according to any of the preceding claims, **characterized in that** the method is performed continuously or batchwise.

10. Apparatus for pelletizing a liquid or pasty material comprising a vessel to accommodate a liquid coolant, comprising an introduction device (4) for introduction of the material into the coolant, the vessel comprising a coolant bath in which there is disposed a system (3) for introduction of a gas for production of turbulence or movement of the coolant in the coolant bath.

11. Apparatus according to Claim 10, **characterized in that** the system (3) comprises at least one nozzle.

12. Apparatus according to Claim 10 or 11, **characterized in that** the system (3) produces a tangential gas flow in the coolant bath.

13. Apparatus according to any of Claims 10 to 12, **characterized in that** the apparatus has a coolant level control unit (1).

14. Apparatus according to any of Claims 10 to 13, **characterized in that** the apparatus has a unit (12) for warming or heating a gas.

15. Apparatus according to Claim 14, **characterized in that** the unit for warming or heating a gas is connected to an open-loop and/or closed-loop control unit.

16. Apparatus according to any of Claims 10 to 15, **characterized in that** the apparatus has a sterilizing unit.

17. Apparatus according to any of Claims 10 to 16, **characterized in that** the apparatus has a nozzle system (11) for a cleaning fluid.

## Revendications

1. Procédé de granulation d'une masse liquide ou pâteuse, dans lequel on introduit la masse dans un agent réfrigérant liquide d'un bain d'agent réfrigérant dans un réservoir, dans lequel on produit un mouvement de l'agent réfrigérant ou des turbulences dans le bain d'agent réfrigérant par l'introduction d'un gaz.

2. Procédé selon la revendication 1, **caractérisé en ce que** l'on insuffle le gaz tangentiellement.

3. Procédé selon la revendication 1 ou 2, **caractérisé en ce que** l'on utilise comme agent réfrigérant un gaz liquéfié par refroidissement.

4. Procédé selon l'une quelconque des revendications 1 à 3, **caractérisé en ce que** l'on accumule sur le fond du réservoir les granules formés dans le bain d'agent réfrigérant.

5. Procédé selon l'une quelconque des revendications 1 à 4, **caractérisé en ce que** l'on évacue l'agent réfrigérant hors du réservoir pour l'enlèvement des granules formés.

6. Procédé selon l'une quelconque des revendications 1 à 5, **caractérisé en ce que** l'on élimine des résidus d'agent réfrigérant dans la région des granules formés par un traitement avec un courant de gaz, après l'évacuation de l'agent réfrigérant hors du réservoir.

7. Procédé selon l'une quelconque des revendications 1 à 6, **caractérisé en ce que** l'on évacue les granules formés à travers une ouverture pouvant être fermée dans le fond du réservoir, après l'évacuation et l'élimination de l'agent réfrigérant.

8. Procédé selon l'une quelconque des revendications précédentes, **caractérisé en ce que** le procédé est exécuté de façon commandée et/ou régulée.

9. Procédé selon l'une quelconque des revendications précédentes, **caractérisé en ce que** l'on exécute le procédé de façon continue ou discontinue.

10. Dispositif pour la granulation d'une masse liquide ou pâteuse, avec un réservoir destiné à contenir un agent réfrigérant liquide, avec un dispositif d'introduction (4) pour introduire la masse dans l'agent réfrigérant, dans lequel le réservoir contient un bain d'agent réfrigérant, dans lequel est disposé un système (3) pour introduire un gaz destiné à produire des turbulences ou un mouvement de l'agent réfrigérant dans le bain d'agent réfrigérant.

11. Dispositif selon la revendication 10, **caractérisé en ce que** le système (3) comprend au moins une buse.

12. Dispositif selon la revendication 10 ou 11, **caractérisé en ce que** le système (3) produit un courant de gaz tangentiel dans le bain d'agent réfrigérant.

13. Dispositif selon l'une quelconque des revendications 10 à 12, **caractérisé en ce que** le dispositif présente un dispositif de contrôle du niveau d'agent réfrigérant (1).

14. Dispositif selon l'une quelconque des revendications 10 à 13, **caractérisé en ce que** le dispositif présente un dispositif (12) pour le chauffage ou le réchauffage d'un gaz.

15. Dispositif selon la revendication 14, **caractérisé en ce que** le dispositif pour le chauffage ou le réchauffage d'un gaz est relié à un dispositif de commande et/ou de régulation.

16. Dispositif selon l'une quelconque des revendications 10 à 15, **caractérisé en ce que** le dispositif présente un dispositif de stérilisation.

17. Dispositif selon l'une quelconque des revendications 10 à 16, **caractérisé en ce que** le dispositif présente un système de buses (11) pour un liquide de nettoyage.
